# EUROPEAN PATENT APPLICATION

(11) **EP 3 851 364 A1**
(43) Date of publication of application: **21.07.2021**
(21) Application number: 21152542.3
(22) Date of filing: 20.01.2021
(51) Int. Cl.: B62J 1/12, B62J 50/30, B62J 1/00

(54) **MOTORCYCLE SADDLE**

(30) Priority: 20.01.2020 IT 202000000958
(71) Applicant: SELLE ITALIA S.r.l., 31011 Asolo (TV) (IT)
(72) Inventor: BIGOLIN, Riccardo, I-31011 Asolo, TREVISO (IT)
(74) Representative: Mitola, Marco

(57) **Abstract**

A motorcycle saddle (4), comprising a saddle body (8) provided with at least one support and fixing plate (12) for fixing the saddle (4) to an associable motor vehicle, a padding (16) associated with the support and fixing plate (12) in order to be interfaced with a user. Advantageously, at a perineal area shaped to be interfaced with the user's perineal area, the padding (16) has a seat (20) at least partially recessed with respect to the padding (16) itself. Said seat (20) is provided with at least one vent or drain (28) for draining any liquids out of the seat (20) itself.

## Description

### FIELD OF APPLICATION

The present invention relates to an improved vehicle saddle and to the related vehicle saddle kit. The term vehicles preferably, but not exclusively, means motorcycles, such as motorcycles with two, three, or more wheels. The present invention preferably applies to vehicle saddles exposed to the weathering, such as in the case of motorcycles, for example. In any case, the present invention may also apply to vehicle seats arranged in closed environments, such as in the case of motor vehicles.

### BACKGROUND ART

As is known, the vehicle saddles are to be as comfortable as possible so as to ensure the required driving comfort for the user, even after particularly long journeys without any stops.

In the case of motorcycles, not only do the saddles need to comply with certain comfort criteria in order that they are easy to ride by the user, but they also need to comply with certain aesthetic rules given that they need to be integrated as much as possible with the visual lines of the corresponding motorcycle, since they are visible and thus form an integral part of the appearance of the vehicle.

The solutions of the prior art provide for the creation of shapes which accommodate more the appearance of the saddle, to the detriment of comfort.

The saddles of sports motorcycles have a flat shape, with little or poor padding, while the saddles of touring vehicles have increased padding.

In any case, regardless of the aesthetic shapes and type of vehicle they are intended for, the solutions of the prior art do not effectively solve the technical problem of driving comfort, with particular reference to the pressure/compression of the perineal area.

Indeed, in the case of long journeys on the saddle, an excessive pressure on the user's perineal area may cause the compression of the prostrate, with bothersome consequences and a considerable worsening of the driving comfort.

The solutions known to date - especially in the field of motorcycles - do not satisfactorily solve the problem of comfort which instead is sacrificed as a function of appearance.

### PRESENTATION OF THE INVENTION

Therefore, the need to solve the drawbacks and limitations mentioned above with reference to the prior art is felt.

Such a need is met by a saddle for vehicles according to claim 1 and by a kit according to claim 15.

### DESCRIPTION OF THE DRAWINGS

Further features and advantages of the present invention will become more comprehensible from the following description of preferred embodiments given by way of preferred non-limiting examples, in which:

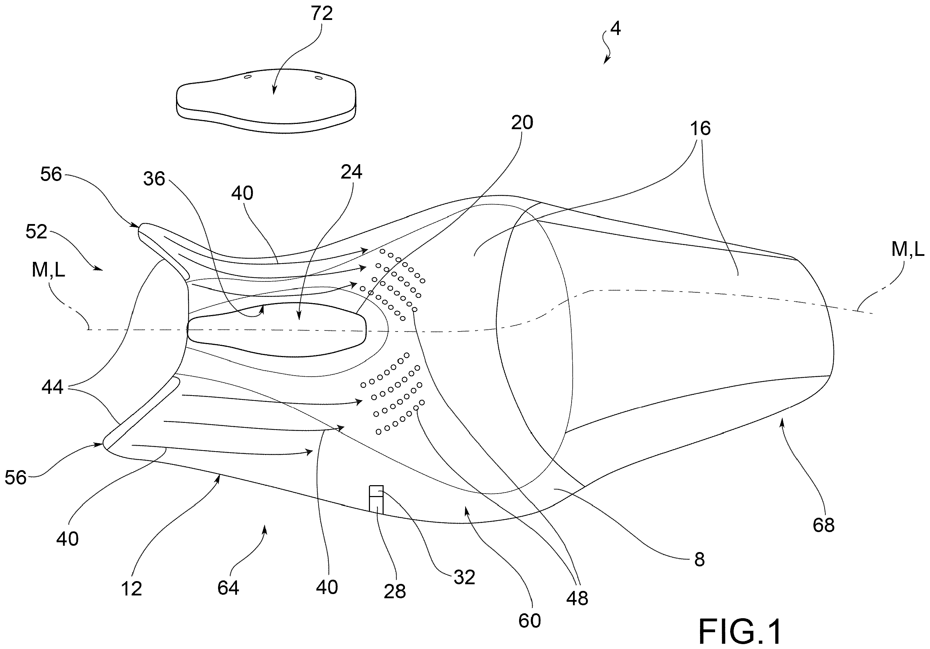

Figure 1 shows a front perspective view of a saddle according to a possible embodiment of the present invention;

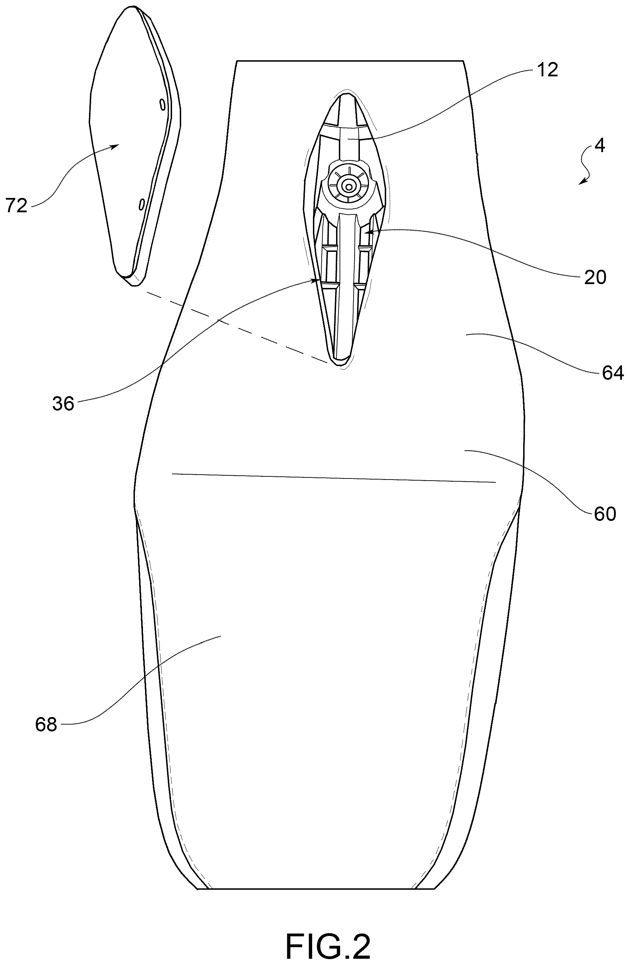

Figure 2 shows a front perspective view of a saddle according to a further embodiment of the present invention (with seat also on the passenger side);

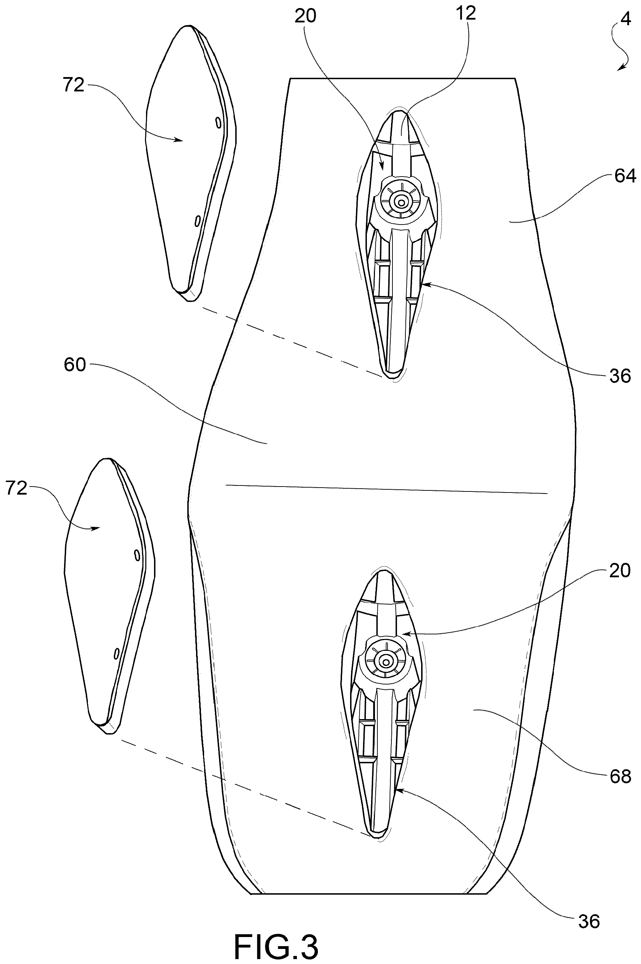

Figure 3 shows a front perspective view of a saddle according to a further embodiment of the present invention;
Figure 4 shows a sectional view of a saddle according to a further embodiment of the present invention.

Elements or parts in common to the embodiments described will be indicated hereafter using the same reference numerals.

### DETAILED DESCRIPTION

With reference to the aforesaid drawings, a motorcycle saddle is indicated by reference numeral 4 as a whole.

The motorcycle saddle 4 comprises a saddle body 8 provided with at least one support and fixing plate 12 for fixing saddle 4 to an associable motor vehicle, in particular to the frame of said motorcycle.

Saddle 4 further comprises a padding 16 associated with the support and fixing plate 12 so as to be interfaced with the user; in other words, the padding cushions the contact between the user and the saddle itself by damping, albeit partially, the seat base and improving the overall comfort for the user.

Advantageously, at a perineal area shaped to be interfaced with the user's perineal area, the padding 16 has a seat 20 at least partially recessed with respect to the padding 16 itself, i.e., with respect to an upper wall 24 of padding 16.

Such a seat 20 preferably is symmetrical with respect to a plane of symmetry and/or centerline M-M of the saddle itself. Such a seat 20 preferably has an elongated shape along a main longitudinal direction L-L, parallel to said plane of symmetry and/or centerline M-M.

According to a possible embodiment, seat 20 has a diamond or rhomboid shape along said main longitudinal direction L-L.

Advantageously, said seat 20 is provided with at least one vent or drain 28 for draining any liquids out of the seat 20 itself.

According to an embodiment, said vent or drain 28 comprises at least one pervious small tube connecting seat 20 to an outer portion with respect to the support and fixing plate 12.

According to a possible embodiment, said vent or drain 28 is provided with at least one non-return valve 32 shaped to allow the drainage of a liquid out of seat 20 and to prevent a liquid from entering seat 20 through the vent or drain 28.

Said non-return valve 32 may be constructed in various manners; for example, the non-return valve 32 comprises a portion of breathable fabric, such as Gore-Tex®.

As mentioned above, seat 20 may have various geometrical shapes and depths; according to an embodiment, seat 20 extends up to an upper bottom wall 36 of said support and fixing plate 12.

Padding 16 preferably has, at a peripheral wall 36 delimiting seat 20, a greater rigidity than portions not adjacent to the seat 20 itself, so as to limit the deformation of seat 20 once the user has sat down.

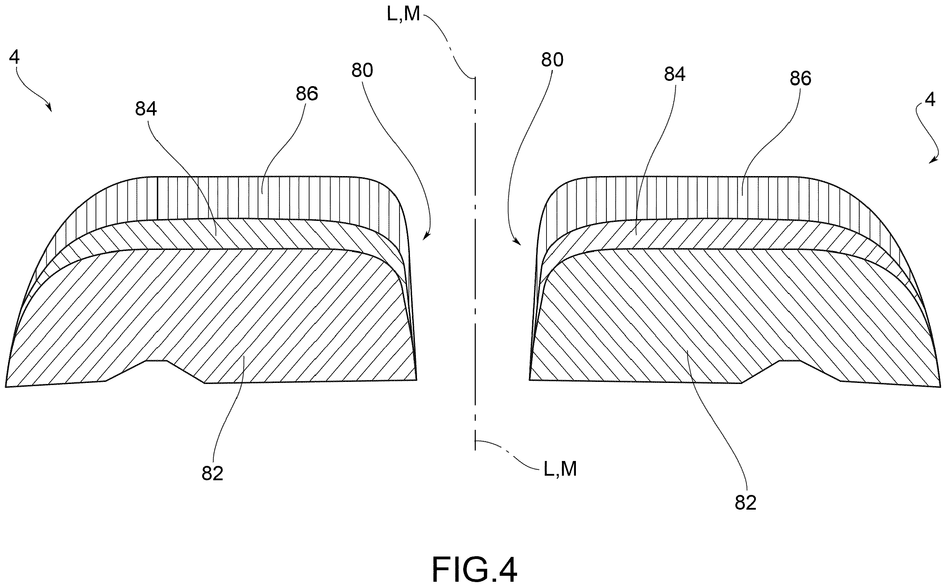

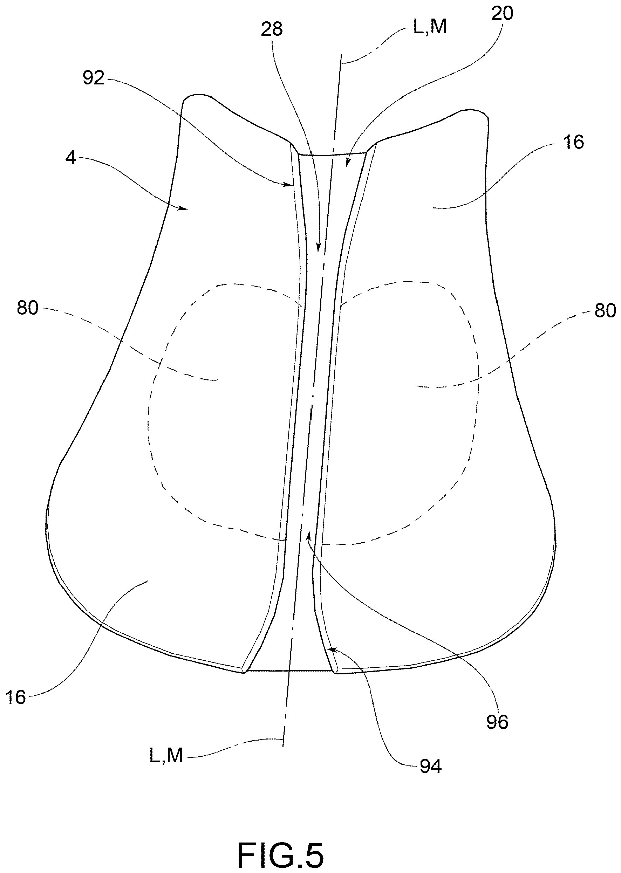

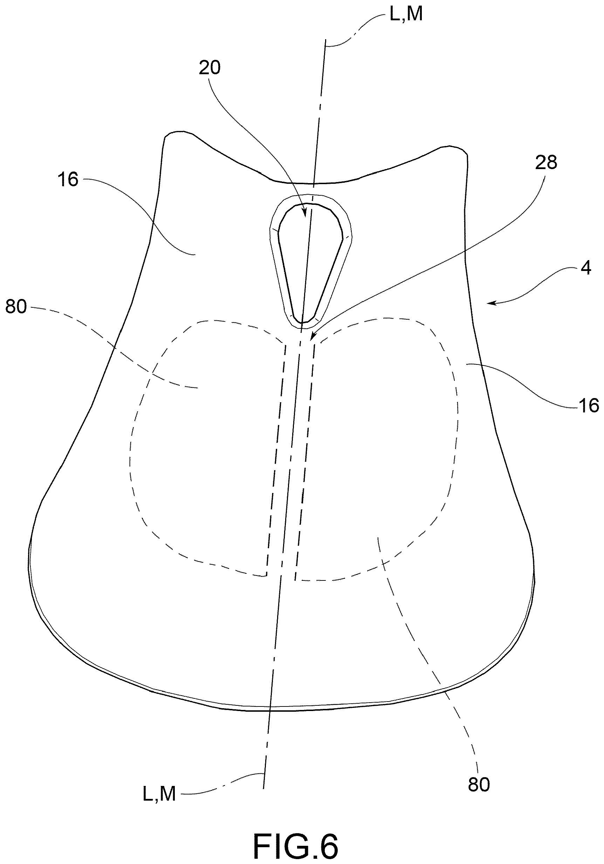

For example (Figure 4), padding 16, at said peripheral wall 36 delimiting seat 20, has a double density portion 80 with hardness values varying from 20 to 30 Shore C. This double density portion 80 comprises a lower polyurethane layer 82, for example, covered with an intermediate gel layer 84, in turn protected by a containing film 86 made of foam material, e.g., made of "COPREN" .

The containing film serves the function of containing and fixing in place the intermediate gel layer 84.

According to an embodiment, padding 16 comprises a plurality of ventilation channels 40 extending from air intakes 44 to air outlets 48.

The air intakes 44 are preferably arranged at a front portion 52 of the saddle body 8, on the side of the forward travel direction. Even more preferably, the air intakes are arranged on side edges 56 arranged so as to intercept the air from the front of the vehicle during the forward travel.

The air outlets 48 are preferably arranged close to a central portion 60 of saddle 4, at the user's ischial bones.

According to a variant, the air outlets 48 and/or the air intakes 44 are provided with non-return valves (not shown).

The saddle 4 of the present invention may be of the single type, configured to accommodate the driver alone, or of the dual type, configured to also accommodate the passenger.

In the dual type configuration, the saddle body 8 may comprise a front portion 64 intended to accommodate the driver of the motor vehicle, and a rear portion 68 intended to accommodate a passenger, in which both the front portion 64 and the rear portion 68 are each provided with a seat 20 thereof, provided with at least one vent or drain 28 for draining any liquids out of the seat itself.

The present invention also relates to a motorcycle kit comprising a saddle 4 provided with at least one seat 20, as described above, and a removable bag 72 at least partially counter-shaped with respect to said seat 20 and at least partially associable with said seat 20 by shape coupling so that it is at least partially, or even integrally, contained within said seat 20.

The removable bag 72 aims, on the one hand, at filling seat 20 so as to take advantage at least partially of the corresponding volume which would otherwise be lost, and on the other, at providing a practical storage compartment which is easily removable and wearable the user.

As can be appreciated from the description above, the present invention allows to overcome the drawbacks presented in the prior art.

In particular, the present invention allows to obtain a saddle for vehicles, in particular for motorcycles, which has a high travel comfort since it avoids the perineal area from being pressed/compressed by virtue of the central seat.

Comfort is further improved due to the presence of differentiated rigidity areas at the perineal area, i.e., at the periphery surrounding the seat.

Moreover, the presence of ventilation channels considerably improves the travel comfort in terms of conditioning in the areas in contact with the user.

A correct drainage of any liquids, typically water, which would otherwise accumulate in the seat due to the decompression of the perineal area, may be due to the presence of vents.

The presence of non-return valves ensures that the liquid may flow out of the seat and not instead penetrate in the opposite direction.

Therefore, as shown, the present invention ensures the required travel comfort.

At the same time, the appearance of the saddle, and therefore of the motorcycle incorporating it, are not sacrificed.

Indeed, the saddle is perfectly integrated within the lines of the motorcycle on which it is incorporated. The solution of the present invention does not distort the overall shapes of the saddle in any manner, so that it may be subsequently applied to pre-existing motorcycle saddles.

The central seat may be both hidden and emphasized as an aesthetic pattern for the motorcycle.

Indeed, the solution of a kit provided with a removable bag allows the almost complete concealing of the presence of the seat; an only slightly recessed seat may also be provided in order to conceal the presence of the seat as much as possible.

The seat may also be aesthetically emphasized on the saddle, for example by providing a specific peripheral lighting on periphery of the seat and/or within the seat, preferably with LED lighting.

When provided, the removable bag allows the volume of the seat to be advantageously used as a storage compartment, for example as a holder for keys, documents, and the like.

When required, the user may quickly remove the bag and bring the related contents with him/her.

In order to meet contingent and specific needs, those skilled in the art can make several changes and variants to the saddles and kits described above, all contained within the scope of the invention as defined by the following claims.

## Claims

1. A motorcycle saddle (4), comprising:
- a saddle body (8) provided with at least one support and fixing plate (12) for fixing the saddle (4) to an associable motor vehicle,
- a padding (16) associated with the support and fixing plate (12) in order to be interfaced with a user, **characterized in that**
- at a perineal area shaped to be interfaced with the user's perineal area, the padding (16) has a seat (20) at least partially recessed with respect to the padding (16) itself,
- wherein said seat (20) is provided with at least one vent or drain (28) for draining any liquids out of the seat (20) itself.

2. A motorcycle saddle (4) according to claim 1, wherein said vent or drain (28) comprises at least one pervious small tube connecting the seat (20) to an outer portion with respect to the support and fixing plate (12).

3. A motorcycle saddle (4) according to claim 1 or 2, wherein said vent or drain (28) is provided with at least one non-return valve (32) shaped to allow the drainage of a liquid out of the seat (20) and to prevent a liquid from entering the seat (20) through the vent or drain (28) .

4. A motorcycle saddle (4) according to claim 3, wherein said non-return valve (32) comprises a portion of breathable fabric, such as Gore-tex®.

5. A motorcycle saddle (4) according to any one of claims 1 to 4, wherein said seat (20) extends to an upper bottom wall (24) of said support and fixing plate (12).

6. A motorcycle saddle (4) according to any one of claims 1 to 5, wherein the seat (20) is symmetrical with respect to a plane of symmetry and/or centerline (M-M) of the saddle itself and has an elongated shape along a main longitudinal direction (L-L), parallel to said plane of symmetry and/or centerline (M-M).

7. A motorcycle saddle (4) according to claim 6, wherein the seat (20) has a diamond or rhomboid shape along said main longitudinal direction (L-L).

8. A motorcycle saddle (4) according to any one of the preceding claims, wherein, at a peripheral wall (36) delimiting the seat (20), the padding (16) has a greater rigidity than portions not adjacent to the seat itself, so as to limit the deformation of the seat itself once the user has sat down.

9. A motorcycle saddle (4) according to claim 8, wherein the padding, at said peripheral wall (36) delimiting the seat (20), has a double density portion (80).

10. A motorcycle saddle (4) according to claim 9, wherein said double density portion (80) has hardness values varying from 20 to 30 Shore C.

11. A motorcycle saddle (4) according to any one of claims 9 to 10, wherein said double density portion (80) comprises a lower polyurethane layer (82), covered with an intermediate gel layer (84) in turn protected by a containing film (84).

12. A motorcycle saddle (4) according to claim 11, wherein said containing film (84) is made of a foam material.

13. A motorcycle saddle (4) according to any one of claims 1 to 10, wherein the padding (16) comprises a plurality of ventilation channels (40) extending from air intakes (44) to air outlets (48).

14. A motorcycle saddle (4) according to any one of claims 1 to 13, wherein the saddle body (8) comprises a front portion (64) intended to accommodate the driver of the motor vehicle, and a rear portion (68) intended to accommodate a passenger, wherein both the front portion (64) and the rear portion (68) are each provided with a seat (20) thereof, provided with at least one vent or drain (28) for draining any liquids out of the seat (20) itself.

15. A motorcycle kit comprising a saddle (4) provided with at least one seat (20) according to any one of the preceding claims and a removable bag (72) at least partially counter-shaped to said seat (20) and at least partially associable with said seat (20) by shape coupling so that it is at least partially contained within said seat (20).
